# EUROPEAN PATENT APPLICATION

(11) **EP 1 806 819 A1**
(43) Date of publication of application: **11.07.2007**
(21) Application number: 06100122.8
(22) Date of filing: 05.01.2006
(51) Int. Cl.: H02J 9/00

(54) **Backup power system**

(71) Applicant: Constructions Electroniques + Telecommunications, En abrégé "C.E.+T.", 4020 Liège (Wandre) (BE)
(72) Inventor: Bleus, Paul c/o C.E.T., 4020, Liège (Wandre) (BE)
(74) Representative: Gevers, François

(57) **Abstract**

A power backup processor comprising a first converter for converting AC to DC and having a first AC input and a first DC output, the first AC input being provided to be connected to an AC power supply; a second converter for converting DC to AC and having a first DC input and a first AC output, the first AC output provided to be connected to a critical load; a third converter for converting a first DC voltage to a second DC voltage, the DC converter having a second DC input and a second DC output, the second DC input being provided to be connected to a DC power supply. A series of controllers is provided to drive the first, second and third converters. The second DC output is connected to the first DC input. The first DC output is connected to the first DC input.

## Description

The present invention relates to a power backup processor comprising a series of converters. The first converter is an AC/DC converter having a first AC input and a first DC output, said first AC input being provided to be connected to an AC power supply. The second converter is a DC/AC converter having a first DC input and a first AC output , said first AC output provided to be connected to a critical load. The third converter is a DC/DC converter for converting a first DC voltage to a second DC voltage, said DC converter having a second DC input and a second DC output, said second DC input being provided to be connected to a DC power supply. The processor further comprises a series of controllers provided to drive the converters. The second DC output is connected to said first DC input.

Power backup processors are typically used in the telecommunication industry to ensure continuous delivery of AC energy to critical applications such as a central office of a telecommunication operator.

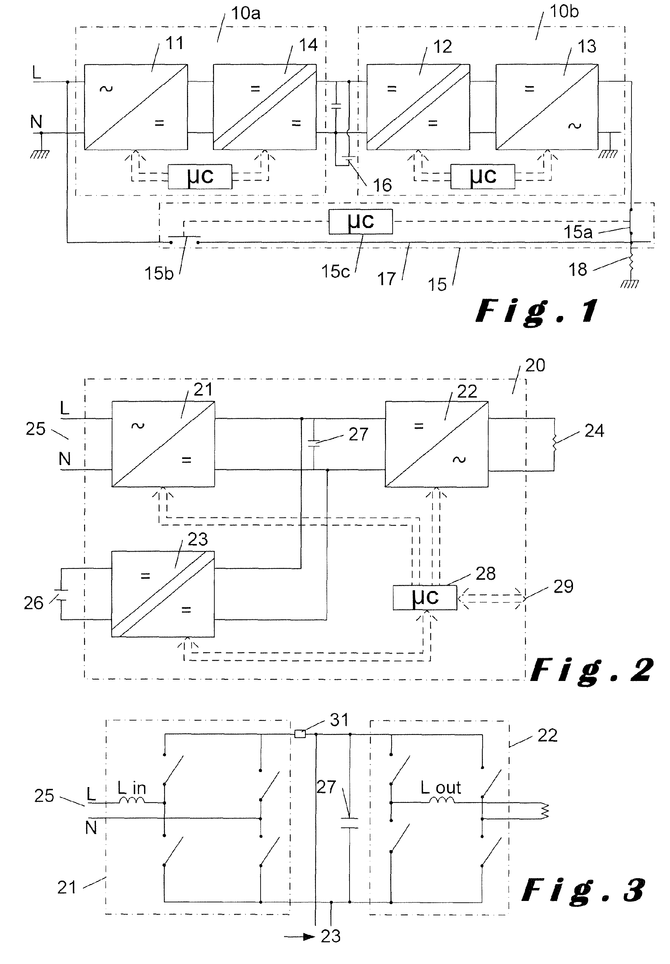

A configuration typically known from the state of the art is illustrated in Figure 1. In this configuration, the second converter 12 connected to the third converter 13 form together an inverter 10b. The first converter 11 is connected to a fourth converter 14 and form together a rectifier 10a. A battery 16 is typically used as a DC power supply and connected between the output from the rectifier and the input from the inverter. A switching unit 15 comprising switches 15a and 15b and a micro-controller 15c to control the switches is foreseen to allow to switch between a connection using the power processor formed by the rectifier 10a and inverter 10b and a connection through the cable 17. The critical load 18 is here illustrated by one resistance. In practise, the critical load may be formed by a plurality of units connected in parallel to the processor. In this known circuitry, the first DC output (from the first converter) is thus connected to a further converter.

A problem with the known configuration as illustrated in Figure 1 is that the efficiency is relatively low. From the AC power supply to the critical load, the current needs to pass through four converters and one switch. The efficiency obtained through such a circuit is typically around 80%. When the critical load is fed with the DC power supply, the current needs to pass through two converters and one switch yielding an efficiency in the order of 90%.

It is a primary object of the present invention to provide a power processor with a higher efficiency, at least when the critical load is fed with the AC current supply, while having a high availability and a high quality of voltage supply.

To this end, in the power processor according to the present invention, the first DC output is connected to both the second DC output and the first DC input. When the critical load is fed by the AC power supply using the power processor, the current needs to pass only through two converters. An efficiency in the order of 90% can be obtained with the AC power supply. In addition, this circuitry has less components and is hence simplified when comparing it with the prior art circuitry. A further consequence is that it allows to have simultaneously a sinusoidal input current (without harmonics) while having a non linear critical load at the output supplied by a sinusoidal voltage with a non sinusoidal current (with current harmonics). This insures proper harmonic filtering of the AC input voltage and simultaneously the AC output current. It further allows proper functioning when a small phase shift between input (AC power supply) and output (at the critical load) is present as well as in case small voltage differences between input and output occur.

Preferably, the series of controllers consists of one controller unit connected to the first, second and third converters. As opposed to individual controllers for each converter, this allows to manage more efficiently and easily the energy flow between the 3 converters, without the need of adding additional components to manage communication between individual controllers.

In a particular embodiment, the third converter is a bi-directional DC/DC converter. This allows to use the device according to the invention as a rectifier, wherein current would flow from the first converter (AC/DC converter) to the third converter (DC/DC converter).

Advantageously, the first converter is a bi-directional AC/DC converter. This allows to use the device according to the invention as a means to supply energy from the DC power input into the AC power supply. The current would then flow from the third converter (DC/DC converter) to the first converter (AC/DC converter). A current flow in this direction could be applied for example in photovoltaic cell applications, wherein the energy generated by the cells is fed back to the AC power supply when not used by the critical load.

When the first and/or the third converter is bi-directional, it can further be advantageous to provide that the second converter is a bi-directional DC/AC converter. This allows to recover energy from the critical load back into the AC and/or DC power supply, which principle could be applied to elevator systems.

It has been found that the efficiency of the device can even be increased to typically 96 to 97% by providing that the first and second converters are formed by one AC/DC/AC unit and that a neutral line is provided between the AC power supply and the critical load to directly connect the AC power supply to the critical load.

In particular, the AC/DC/AC unit comprises one neutral leg connected to the neutral line. This allows to simplify the circuitry of the AC/DC/AC unit. It further allows to increase the efficiency of the processor to values in the order of 95% when the critical load is fed through the AC power supply and higher than 90% when the critical load is fed through the DC power supply, the DC/DC converter and a portion of the AC/DC/AC converter.

Preferably, the power backup processor according to the invention comprises a plurality of power backup processor units connected in parallel, each power backup processor unit comprising the first, second and third converters as claimed in any one of the preceding claims. This allows to guarantee continuous operation should one of the units fail to operate and without the presence of a single point of failure element such as switch in the prior art device of Figure 1.

The device according to particular embodiments of the invention allows to suppress the following two negative effects occurring simultaneously and present in the prior art devices as illustrated in Figure 1. First, when power is supplied through switch 15b and cable 17, disturbances can occur by supplying power to the critical load without filtering. Secondly, when a critical non linear load is supplied, harmonic currents are generated on the AC power supply. This can lead to deterioration of the quality of the AC power supply voltage caused by harmonic currents which are applied to the AC power supply.

Other details and advantages will appear from the description of the annexed drawings.
Figure 1 illustrates a typical configuration of a power backup processor according to the prior art.
Figure 2 illustrates a first embodiment of the power backup processor according to the invention.
Figure 3 illustrates a first particular embodiment of the first and second converters.
Figure 4 illustrates a second particular embodiment of the first and second converters.
Figure 5 illustrates a second embodiment of the power backup processor according to the invention with several units in parallel.

As illustrated in Figure 2, a power processor unit 20 comprises a first converter 21 comprising an AC input connected to an AC power supply 25. This converter is provided to convert AC power of for example 230 V AC to a DC power of for example 350 - 400 V DC. The DC output of this first converter is connected to a DC input of a second converter 22. The second converter 22 is provided to convert de DC power to AC power of for example 230 V AC, which is then fed to the critical load 24. The path formed by the first and the second converters is used when power needs to be fed from the AC power supply 25.

The power processor unit 20 is further provided to receive power from a DC power supply 26 such as a battery providing a DC power of for example 48 V DC. To this end, a third converter 23 comprises a DC input provided to be connected to the DC power supply 26 and a DC output. The third converter 23 is preferably an isolated converter (as represented by the double diagonal line), but could in some application be non isolated. According to the invention and as illustrated in Figure 2, this DC output is connected to both the DC output from the first converter 21 and the DC input from the second converter. The path formed by the third and the second converters is thus used when power needs to be fed from the DC power supply 26.

A capacitor 27 is provided between the output of the first converter 21 and the input of the second converter 22 and acts an energy storage unit. A micro-controller or controller 28 is connected to each of the three converters 21, 22 and 23 to communicate commands to each of the converters. The micro-controller is further connected to communication output 29.

Figure 3 shows in more details a first possible embodiment of the first and second converters 21 and 22 from the power processor according to the present invention. The DC/DC converter 23 is then connected between the first and second converters 21 and 22.

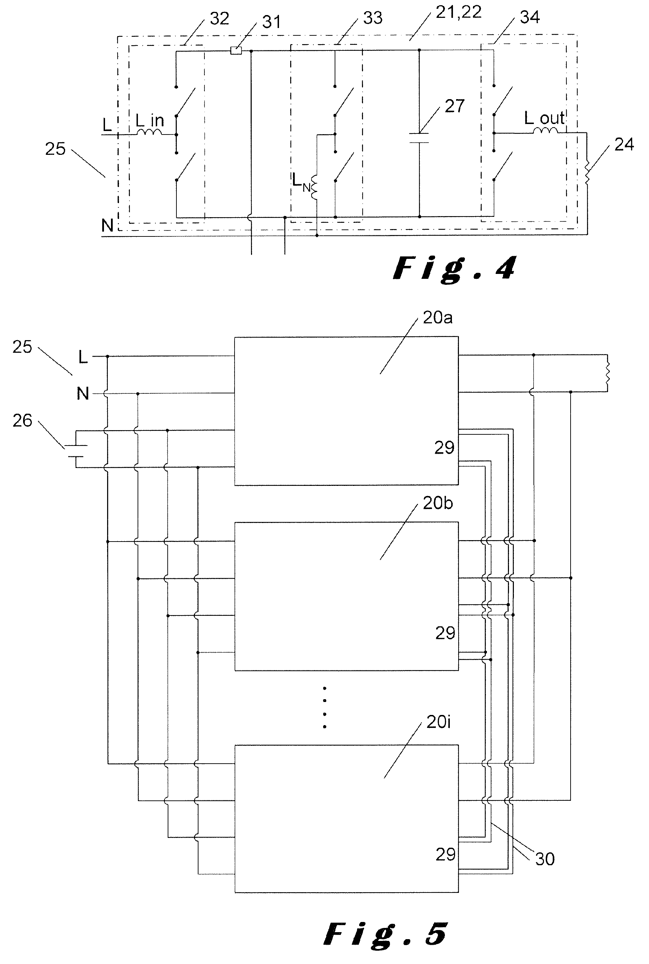

According to a particular embodiment, as shown in Figure 4, the neutral line N from the AC power supply 25 is directly connected to the critical load 24, without having to pass through the converters. In this case, the converter forms one AC/DC/AC converter 21, 22 and includes the capacitor 27. The AC/DC/AC converter 21, 22 comprises a first leg 32 at the AC power supply side, a second leg 33 acting as a "neutral leg" and a third leg 34 on the critical load 24 side.

Optionally, the neutral line is connected to a neutral leg of the AC/DC/AC converter. According to another embodiment, the neutral leg of the AC/DC/AC converter is not present. In this case, the AC/DC/AC converter is even more simplified since it contains only two legs.

As shown in Figures 3 and 4, protection means 31 are preferably provided in series with the first converter 21 (Figure 3) or with the first leg 32. The protection means consist in particular of a fuse and allow to use the DC/DC converter when the first converter 21 (Figure 3) or the first leg 32 (Figure 4) breaks and could possibly short-circuit the DC voltage at the capacitor 27.

Figure 5 shows an embodiment from the processor according to the present invention comprising a plurality of processor units 20a, 20b, ... 20i connected in parallel. Each of the processor units 20a, 20b, ... 20i has a configuration as shown in Figure 2. A communication bus 30 connects the communication outputs 29 of the communication units. Hence the micro-controllers of the processor units are interconnected to allow synchronisation of the first AC outputs and to organise load sharing between the units. The principles of synchronisation and load sharing between units is known to the person skilled in the are and is hence not need described in detail. Preferably, as illustrated in Figure 5, the communication bus comprises a double connection between the units to provided redundancy in case one of the connections would fail. Instead of a cable connection, wireless connection using IR or HF technology, in particular Bluetooth technology, is also conceivable. It is also conceivable to provide one connection with cables and the other connection as a wireless connection.

As will be appreciated, modifications are conceivable without falling outside the scope of the appended claims. For example, it is conceivable, instead of providing one micro-controller for each processor unit as illustrated in Figure 2, one micro-controller for each converter 21, 22 and 23 with communication means between each of the controllers. Having only one controller per processor unit is however advantageous, since it does not require means to ensure proper communication between the controllers of a same processor unit. As can be seen in the drawings, it is important that the three converters converge in one point: a DC bus bar at the capacitor 27.

## Claims

1. A power backup processor comprising:
a) a first converter for converting AC to DC and having a first AC input and a first DC output, said first AC input being provided to be connected to an AC power supply,
b) a second converter for converting DC to AC and having a first DC input and a first AC output, said first AC output provided to be connected to a critical load,
c) a third converter for converting a first DC voltage to a second DC voltage, said DC converter having a second DC input and a second DC output, said second DC input being provided to be connected to a DC power supply;
d) a series of controllers provided to drive said first, second and third converters,
wherein said second DC output is connected to said first DC input,
**characterised in that** said first DC output is connected to both said second DC output and said first DC input.

2. The power backup processor according to claim 1, wherein the series of controllers consists of one controller unit connected to the first, second and third converters.

3. The power backup processor according to claim 1 or 2, wherein the third converter is a bi-directional DC/DC converter.

4. The power backup processor according to any one of the preceding claims, wherein the first converter is a bi-directional AC/DC converter.

5. The power backup processor according to claims 3 or 4, wherein the second converter is a bi-directional DC/AC converter.

6. The power backup processor according to any one of the preceding claims, wherein the first and second converters are formed by one AC/DC/AC unit and wherein a neutral line is provided between the AC power supply and the critical load to directly connect the AC power supply to the critical load, said AC/DC/AC unit comprising a DC port provided to be connected to said second DC output.

7. The power backup processor according to claim 6, wherein the AC/DC/AC unit comprises one neutral leg connected to the neutral line.

8. The power backup processor according to any one of the preceding claims, further comprising a storage capacitor connected to said first DC output, said first DC input and said second DC output.

9. The power backup processor according to any one of the preceding claims, comprising a plurality of power backup processor units connected in parallel, each power backup processor unit comprising the first, second and third converters and said series of controllers as claimed in any one of the preceding claims.

10. The power backup processor according to claim 9, further comprising communication means, in particular an inter unit communication bus, connected to the controllers of each power backup processor unit.
